# EUROPÄISCHE PATENTANMELDUNG

(11) **EP 1 070 900 A2**
(43) Veröffentlichungstag der Anmeldung: **24.01.2001**
(21) Anmeldenummer: 00114784.2
(22) Anmeldetag: 10.07.2000
(51) Int. Cl.: F16L 39/04

(54) **Verbindungsvorrichtung**

(30) Priorität: 21.07.1999 DE 19934032
(71) Anmelder: PROMATEC GmbH Berlin, Sondermaschinen und Elektronik, 12435 Berlin (DE)
(72) Erfinder: Dame, Jürgen, 12683 Berlin (DE); Münchhausen, Rainer, 16341 Zepernick (DE)
(74) Vertreter: TER MEER STEINMEISTER & PARTNER GbR

(57) **Zusammenfassung**

Die Erfindung betrifft eine Verbindungsvorrichtung (20) zur Verbindung zumindest einer stationären Fluidleitung (25) mit zumindest einer relativ dazu bewegbaren Fluidleitung (19), die eine Umlaufbewegung um eine Drehachse (A) ausführen kann. Um eine zur Erzeugung von Hochvakuum geeignete Verbindung zu schaffen, die ohne den störenden Einfluß von Dicht- und Schmiermitteln arbeitet, weist die Verbindungsvorrichtung (20) ein koaxial zur Drehachse (A) angeordnetes stationäres Teil (26), in dem zumindest eine mit der stationären Fluidleitung (25) verbindbare stationäre Anschlußleitung (34) vorgesehen ist, ein koaxial zur Drehachse (A) und zum stationären Teil (26) angeordnetes Drehteil (28), in dem zumindest eine mit diesem umlaufende Anschlußleitung (41) vorgesehen ist, die mit der bewegbaren Fluidleitung (19) verbindbar ist, und zumindest einen Ringkanal (43) auf, der zwischen dem stationären Teil (26) und dem Drehteil (28) vorgesehen ist und in den die stationäre und die umlaufende Anschlußleitung (34, 41) münden.

## Beschreibung

Die vorliegende Erfindung betrifft eine Verbindungsvorrichtung zur Verbindung zumindest einer stationären Fluidleitung mit zumindest einer relativ dazu bewegbaren Fluidleitung, die eine Umlaufbewegung um eine Drehachse ausführen kann.

Derartige Verbindungsvorrichtungen werden überall dort benötigt, wo ein an einem drehbar angeordneten Träger angebrachter Behälter entweder mit Hilfe einer feststehend angeordneten Pumpe evakuiert oder mit einem Fluid, also einem Gas oder einer Flüssigkeit, befüllt werden soll, wobei der entsprechende Fluidvorratsbehälter ebenfalls feststehend angeordnet ist.

Insbesondere bei der Lampenherstellung werden Pumpmaschinen eingesetzt, die z. B. als getaktete Rundläufer ausgebildet sind und an einem sich um eine Drehachse rotierenden Drehträger eine Vielzahl von Pumpstationen aufweisen, an denen Lampenkolben angebracht werden können, um zunächst evakuiert und anschließend definiert befüllt zu werden. Die eigentlichen Pumpen, also die Vakuumerzeuger, sind bei derartigen Pumpmaschinen feststehend angeordnet, und die Verbindung der am Drehträger vorgesehenen Fluidleitungen mit den Vakuumleitungen der einzelnen Pumpen wird über einen sogenannten Pumpenschieber hergestellt.

Der Pumpenschieber weist dabei ein stationäres Teil mit einer ersten Dicht- und Führungsfläche auf, in der die Vakuumleitungen von den stationären Pumpen münden. Ein mit dem Drehträger umlaufendes Drehteil gleitet beim Betrieb der Pumpmaschine mit einer entsprechenden Dicht- und Führungsfläche auf der Dicht- und Führungsfläche am stationären Teil. Um die Vakuumleitungen mit den einzelnen Pumpstationen am Drehträger zu verbinden, sind in dem Drehteil Anschlußleitungen vorgesehen, die so in der Dicht- und Führungsfläche des Drehteils münden, daß bei einer Relativbewegung zwischen dem Drehteil und dem stationären Teil die einzelnen Pumpstationen am Drehträger in einer dem gewünschten Arbeitstakt entsprechenden Weise nacheinander mit den zu den Pumpen bzw. Vakuumerzeugern führenden Vakuumleitungen und den gegebenenfalls erforderlichen Befülleitungen verbunden werden.

Da die beiden Teile des Pumpenschiebers aufeinander gleitend geführt sind, ist es erforderlich, mit einem geeigneten Dicht- und Schmiermittel, insbesondere mit einem geeigneten Öl den mechanischen Verschleiß der Dicht- und Führungsflachen zu verringern und die Abdichtung gegenüber der Luftatmosphäre zu verbessern.

Die Verwendung von Öl ist jedoch insbesondere dann problematisch, wenn bei der Lampenherstellung ein hohes und ölfreies Vakuum in den einzelnen Lampenkolben benötigt wird.

Der Erfindung liegt die Anspruch zugrunde, eine weitere Verbindungsvorrichtung der Eingangs genannten Art bereitzustellen, die es insbesondere ermöglicht, das Evakuieren und Befüllen von Behältern, die eine Umlaufbewegung ausführen, ohne Gefahr einer Kontamination mit Dichtmitteln durchzuführen.

Diese Aufgabe wird durch die Verbindungsvorrichtung nach Anspruch 1 gelöst. Vorteilhafte Weiterbildungen und Ausgestaltungen der Erfindung sind in den Unteransprüchen beschrieben.

Erfindungsgemäß ist also zwischen einem stationären Teil und einem zu einer Drehachse koaxialen Drehteil zumindest ein Ringkanal vorgesehen, in den eine im stationären Teil vorgesehene stationäre Anschlußleitung und eine im Drehteil vorgesehene umlaufende Anschlußleitung münden. Dabei ist zweckmäßiger Weise eine Vielzahl von stationären Anschlußleitungen im stationären Teil und eine Vielzahl von umlaufenden Anschlußleitungen im Drehteil vorgesehen.

Durch den erfindungsgemäße Einsatz eines oder mehrerer Ringkanäle zur Herstellung einer Fluidverbindung zwischen den Anschlußleitungen im Drehteil und im stationären Teil lassen sich aufeinander gleitende Dicht- und Führungsflächen vermeiden, so daß auf Dichtmittel, wie z. B. Öl, verzichtet werden kann.

Erfindungsgemäß wird also das unmittelbare Aufeinandergleiten von stationärem Teil und Drehteil im Dichtungsbereich vermieden.

Obwohl es grundsätzlich möglich ist, eine stationäre Anschlußleitung über einen Ringkanal mit mehreren umlaufenden Anschlußleitungen zu verbinden, oder umgekehrt eine umlaufende Anschlußleitung über einen einzelnen Ringkanal an eine Mehrzahl von stationären Anschlußleitungen anzuschließen, ist es erfindungsgemäß bevorzugt, daß jede der stationären Anschlußleitungen über einen zugeordneten Ringkanal mit einer der umlaufenden Anschlußleitungen verbunden ist.

Zeckmäßiger Weise zeichnet sich eine vorteilhafte Weiterbildung der erfindungsgemäßen Verbindungsvorrichtung dadurch aus, daß zwischen dem stationären Teil und dem Drehteil ein vorzugsweise zylindrischer Ringkanalraum vorgesehen ist, in dem einzelne Ringkanäle durch Dichtringe von einander getrennt sind, wobei der Ringkanalraum an seinen axialen Enden durch Radialflansche begrenzt wird, von denen der eine am stationären Teil und der andere am Drehteil vorgesehen ist.

Ein derartiger Aufbau der erfindungsgemäßen Verbindungsvorrichtung hat den Vorteil, daß das stationäre Teil und das Drehteil einfach hergestellt werden können und daß für die die Ringkanäle voneinander trennenden Dichtungen herkömmliche, vakuumgeeignete Dichtringe einsetzbar sind, so daß die Herstellungskosten niedrig gehalten werden können.

Grundsätzlich ist es denkbar eine oder beide den Ringkanalraum radial begrenzenden Flächen am stationären Teil bzw. am Drehteil mit umfangsmäßig umlaufenden Stegen oder Nuten zu versehen, die als axiale Positioniermittel für die die Ringkanäle begrenzenden Dichtringe dienen. Bevorzugt ist es jedoch, daß zwischen den die Ringkanäle begrenzenden Dichtringen Distanzringe als Abstandshalter vorgesehen sind. Hierdurch lassen sich Stufen in den den Ringkanalraum begrenzenden Umfangsflächen vermeiden, so daß sich diese Flächen auf einfache Weise sehr genau und äußerst glatt, also mit äußerst geringer Oberflächenrauigkeit herstellen lassen.

Obwohl des grundsätzlich denkbar ist, bei einem hülsenartig ausgebildeten radial innenliegenden Teil, das sowohl als Drehteil als auch als stationäres Teil dienen kann, den Innenraum der Hülse für die Verbindung der entsprechenden Fluidleitungen mit den jeweils vorgesehenen Anschlußleitungen zu nutzen, ist es bei einer besonders vorteilhaften Ausgestaltung der Erfindung vorgesehen, daß die Anschlußleitungen im radial innenliegenden, hülsenartig ausgebildeten Teil, also im stationären Teil oder im Drehteil, sich axial erstreckende Abschnitte in einer Umfangswand des radial innenliegenden Teils aufweisen, die jeweils mit einem in den zugeordneten Ringkanal mündenden radialen Abschnitt kommunizieren, wobei alle sich axial erstreckenden Abschnitte der Anschlußleitungen im radial innenliegenden Teil sich vom selben axialen Ende des radial innenliegenden Teils aus zu den zugeordneten radialen Abschnitten erstrecken.

Auf diese Weise werden die Anschlußöffnungen zur Verbindung der Anschlußleitungen mit den entsprechenden Fluidleitungen an ein axiales Ende des radial innenliegenden Teils verlegt, so daß der Innenraum des hülsenartig ausgebildeten radial innenliegenden Teils als Aufnahmeraum für eine Stütz- und Antriebswelle für einen Drehträger genutzt werden kann.

Die Erfindung wird im folgenden beispielsweise anhand der Zeichnung näher erläutert. Es zeigen:
**Figur 1** einen stark vereinfachten schematischen Schnitt durch eine als Rundläufer konzipierte Pumpmaschine für die Lampenherstellung, bei der eine erfindungsgemäße Verbindungsvorrichtung vorgesehen ist, um Pumpstationen an einem Drehträger mit Pumpen zur Vakuumerzeugung zu verbinden,
**Figur 2a** einen Schnitt durch ein bevorzugtes Ausführungsbeispiel einer erfindungsgemäßen Verbindungsvorrichtung,
**Figur 2b** eine Draufsicht auf das in Figur 2a untere stirnseitige Ende der erfindungsgemäßen Verbindungsvorrichtung und
**Figur 3** eine schematische Darstellung des radial innenliegenden Teils der erfindungsgemäßen Verbindungsvorrichtung nach Figur 2a.

In den verschiedenen Figuren der Zeichnung sind einander entsprechende Bauteile mit gleichen Bezugszeichen versehen.

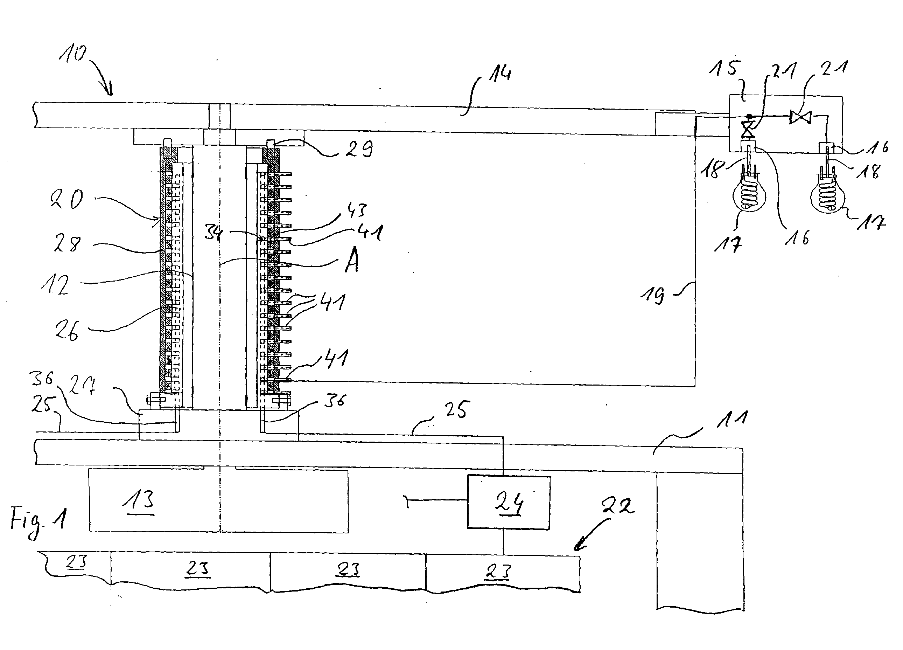

Wie Figur 1 zeigt, weist eine als getakteter Rundläufer konzipierte Pumpmaschine 10 ein in der Zeichnung nur rein schematisch angedeutetes Maschinengestell 11 auf, an dem eine Stütz- und Antriebswelle 12 in nicht näher dargestellter weise gelagert ist. Die Stütz- und Antriebswelle 12 ist an ihrem in Figur 1 unteren Ende mit einem Antriebsmotor 13 verbunden, der von einer Maschinensteuerung (nicht gezeigt) gesteuert wird. An ihrem oberen Ende trägt die Stütz- und Antriebswelle 12 einen Drehträger 14 an dessen Außenumfang eine Vielzahl von Pumpköpfen 15 angebracht ist, von denen nur einer dargestellt ist. In dem beschriebenen Ausführungsbeispiel weist jeder der Pumpköpfe 15 zwei Anschlußeinrichtungen 16 auf, in denen Lampenkolben 17 mit Ihren Pumprohren 18 gehalten sind.

Die Anschlußeinrichtungen 16 weisen dabei Fluidleitungen auf, durch die die Pumprohre 18 und damit die Innenräume der Lampenkolben 17 mit einer Fluidleitung 19 verbindbar sind, die vom Pumpkopf 15 zu einer Verbindungseinrichtung 20 führt. Zwischen jeder der beiden Anschlußeinrichtungen 16 und der Fluidleitung 19 ist dabei ein Absperrventil 21 vorgesehen, um beim Betrieb der Pumpmaschine 10 die Fluidverbindungen zwischen der Fluidleitung 19 und jeder der beiden Anschlußeinrichtungen 16 einzeln absperren zu können, falls eine der Anschlußeinrichtungen 16 nicht mit einem Lampenkolben 17 belegt ist oder falls der darin gehaltene Lampenkolben 17 defekt ist.

Der Pumpmaschine 10 ist eine Pumpenanordnung 22 mit einer Vielzahl von Vakuumpumpen 23, also von Vakuumerzeugern zugeordnet. Wie es schematisch nur für eine der Vakuumpumpen 23 dargestellt ist, ist jede der Vakuumpumpen 23 über eine Ventileinrichtung 24 und eine daran anschließende Fluidleitung 25 mit der Verbindungsvorrichtung 20 verbunden, um jede der Vakuumpumpen 23 mit einem der Pumpköpfe 15 zu verbinden.

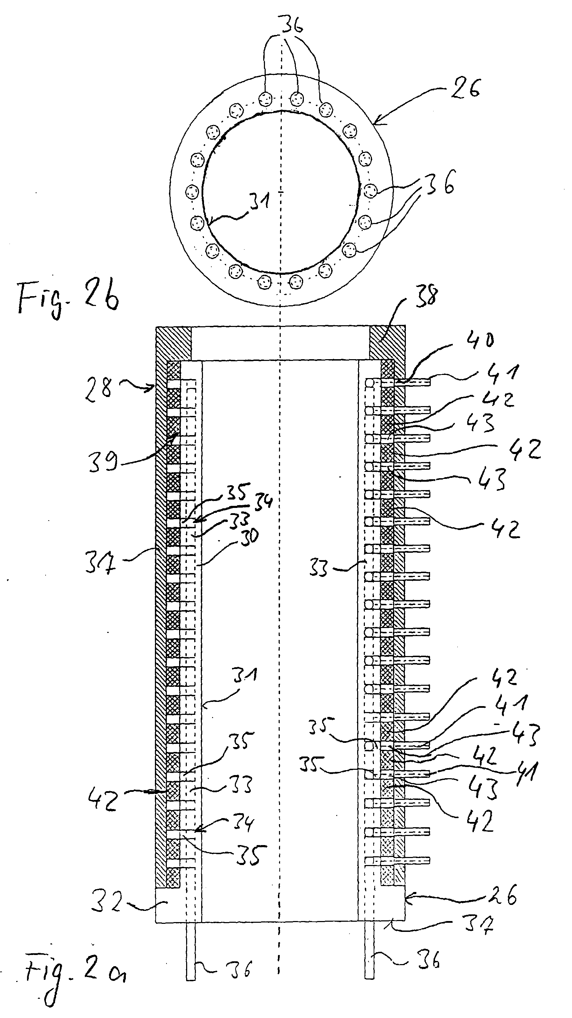

Wie in Figur 1 und 2a gezeigt ist, umfaßt die Verbindungsvorrichtung 20 ein zylinderhülsenartiges stationäres Teil 26, das die Stütz- und Antriebswelle 12 des Drehträgers 14 umgebend fest auf einem Sockel 27 am Maschinengestell 11 montiert ist, und ein koaxial zum stationären Teil 26 und zur Stütz- und Antriebswelle 12 angeordnetes Drehteil 28, das über eine Mitnehmeranordnung 29 so mit dem Drehträger 14 verbunden ist, daß es gemeinsam mit dem Drehträger 14 um dessen Drehachse A rotiert.

Wie am besten in Figur 2a zu erkennen ist, weist das im dargestellten Ausführungsbeispiel innenliegende stationäre Teil 26 einen Zylinderhülsenabschnitt 30 mit einer Durchgangsbohrung 31 und einen nach außen gerichteten radialen Flansch 32 auf. In der Wand des Zylinderhülsenabschnitts 30 des stationären Teils 26 sind parallel zur Zylinderachse, die der Drehachse A entspricht, wenn die Verbindungsvorrichtung 20 in einer Pumpmaschine 10 montiert ist, axiale Abschnitte 33 von Anschlußleitungen 34 vorgesehen, die in radiale Abschnitte 35 münden. An die axialen Abschnitte 33 schließen sich Anschlußstutzen 36 an, die sich von einer unteren Stirnfläche 37 des stationären Teils 26 axial weg erstrecken und an die die am Maschinengestell 11 befestigten Fluidleitungen 25 angeschlossen werden können.

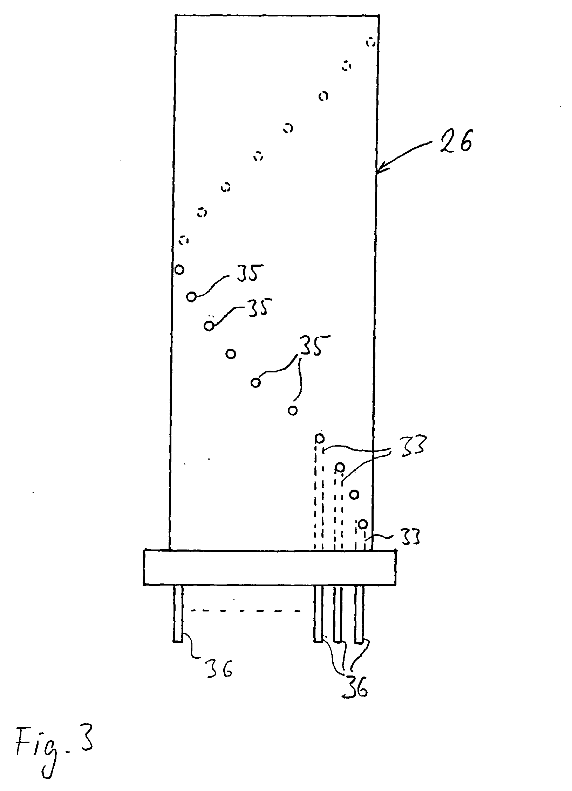

Wie in Figur 2b und 3 zu erkennen ist, sind die axialen Abschnitte 33 der Anschlußleitungen 34 und die Anschlußstutzen 36 umfangsmäßig verteilt in der Hülsenwand des stationären Teils 26 angeordnet. Die radialen Abschnitte 35 der Anschlußleitungen 34, die in der Außenumfangsfläche des Zylinderhülsenabschnitts 30 münden, sind in Axialrichtung gegeneinander versetzt angeordnet.

Das außenliegende Drehteil 28 weist einen Zylinderhülsenabschnitt 37 und einen nach innen gerichteten radialen Flansch 38 auf. Die axiale Länge des Zylinderhülsenabschnitts 37 des Drehteils 28 entspricht dabei der axialen Länge des Zylinderhülsenabschnitts 30 des stationären Teils 26, während der Außenumfang des innenliegenden stationären Teils 26 kleiner ist als der Innenumfang des Zylinderhülsenabschnitts 37 des außenliegenden Drehteils 28, so daß zwischen den Zylinderhülsenabschnitten 30, 37 ein Ringkanalraum 39 gebildet ist, der an seinen axialen Enden von den radialen Flanschen 32, 38 begrenzt wird.

In der Wand des Zylinderhülsenabschnitts 37 des Drehteils 28 sind in Axialrichtung verteilt sich radial erstreckende Durchgangsöffnungen 40 vorgesehen, in die als Anschlußleitungen Anschlußstutzen 41 eingesetzt sind. An jeden der Anschlußstutzen 41 ist, wie in Figur 1 angedeutet, eine mit dem Drehträger 14 umlaufende Fluidleitung 19 angeschlossen.

Die radialen Durchgangsöffnungen 40 im Zylinderhülsenabschnitt 37 des Drehteils 28 sind dabei mit den radialen Abschnitten 35 der Anschlußleitungen 34 im innenliegenden stationären Teil 26 in Axialrichtung so ausgerichtet, daß jeweils ein radialer Abschnitt 35 einer der Anschlußleitungen 34 mit einer radialen Durchgangsöffnung 40, also mit einem Anschlußstutzen 41 in einer Ebene senkrecht zur Zylinderachse liegen.

In dem Ringkanalraum 39 sind eine Vielzahl von Dichtringen 42, z. B. Simmeringe oder andere als Hochvakuumdichtung geeignete Dichtringe, in solchen Abständen und derart ausgerichtet angeordnet, daß jedem Paar von feststehenden und umlaufenden Anschlußleitungen 34, 41 ein Ringkanal 43 zugeordnet ist.

Die axiale Fixierung der Dichtringe 42 zur Bildung der Ringkanäle 43 erfolgt dabei über nicht näher dargestellte Abstandsringe.

Die Verbindungsvorrichtung 20 ermöglicht somit eine drehstellungsunabhängige dauernde Verbindung von feststehenden Fluidleitungen 25 mit um eine Drehachse A umlaufenden Fluidleitungen 19 über die entsprechenden Anschlußleitungen 34 im stationären Teil 26, die Ringkanäle 43 und die umlaufenden Anschlußleitungen oder -stutzen 41 im Drehteil 28.

Anstelle der beschriebenen Funktion des innenliegenden Teils als stationäres Teil 26 und des außenliegenden Teils als Drehteil 28 ist es auch möglich, das außenliegende Teil als stationäres Teil einzusetzen, während sich das innenliegende Teil dreht. Ferner ist es möglich, auch in dem außenliegenden Teil Axialbohrungen vorzusehen, die zusammen mit Radialbohrungen entsprechende Anschlußleitungen bilden. Falls die Durchgangsbohrung 31 des Zylinderhülsenabschnitts 30 des innenliegenden stationären Teils 26 nicht vollständig für andere Zwecke benötigt wird, ist es weiterhin möglich, die Anschlußleitungen 34 durch radiale Durchgangsöffnungen zu bilden, an die dann entsprechende Anschlußleitungen angeschlossen werden können.

Auch die Anordnung der radialen Flansche 32, 38 am innen- und außenliegenden Teil können auf verschiedene Weise variiert werden. Dabei ist es insbesondere denkbar, an beiden axialen Enden des innenliegenden Teils radiale Flansche vorzusehen, die unterschiedliche Durchmesser aufweisen, während das außenliegende Teil nur aus einem Zylinderhülsenabschnitt besteht, dessen Innendurchmesser dem Außendurchmesser des kleineren radialen Flansches entspricht, so daß, wenn das Außenteil auf das Innenteil aufgeschoben ist, es stirnseitig an dem radialen Flansch mit größerem Durchmesser mit einem Ende anliegt, während es im Bereich seines anderen Endes mit seinem Innenumfang am Außenumfang des anderen radialen Flansches am anderen Ende des innenliegenden Teils anliegt.

Obwohl bei dem dargestellten bevorzugten Ausführungsbeispiel der Erfindung jeweils nur eine Anschlußleitung 34 im feststehenden Teil 26 mit einem umlaufenden Anschlußstutzen 41 am Drehteil 28 über einen Ringkanal 43 verbunden ist, ist es je nach den Einsatzbedingungen und Anforderungen auch denkbar, daß jedem Ringkanal 43 mehrere stationäre Anschlußleitungen 34 und/oder mehrere umlaufende Anschlußstutzen 41 zugeordnet sind, wenn beispielsweise bei einer Pumpmaschine 10 die Zuordnung der Pumpköpfe 15 zu den Vakuumpumpen 23 variiert oder die Pumpleistung des Vakuumpumpen 23 erhöht wird.

Im Betrieb der Pumpmaschine 10 zum Evakuieren und Befüllen der Lampenkolben 17 sind die Lampenkolben 17 an den Pumpköpfen 15 bei offenen Absperrventilen 21, also im Normalfall, ständig über die mit dem Drehträger umlaufenden Fluidleitungen 19, die Anschlußstutzen 41, die zugeordneten Ringkanäle 43 und die feststehenden Anschlußleitungen 34 ständig mit den feststehenden Fluidleitungen 25 verbunden, die durch die von der Maschinensteuerung entsprechend den gewünschten Arbeitszyklen gesteuerenten Ventileinrichtungen 24 wahlweise mit den Vakuumpumpen 23 und den Gaszuführvorrichtungen (nicht gezeigt) verbunden werden. Dabei ist jeder Pumpkopf 15 ständig derselben Vakuumpumpe 23 und derselben Gaszuführeinrichtung zugeordnet.

Die erfindungsgemäße Verbindungsvorrichtung zur Verbindung von stationären Fluidleitungen 25 mit um eine Drehachse A umlaufenden Fluidleitungen 19 ermöglicht die Erzeugung eines hohen ölfreien Vakuums in zu evakuierenden Behältern, also im dargestellten Beispiel in Lampenkolben 17, da auf Öle und andere Dicht- und Schmiermittel zwischen Dicht- und Führungsflächen verzichtet werden kann.

Darüber hinaus ergibt sich eine ständige Funktionskontrolle der Pumpmaschine 10, da Funktionsfehler oder -störungen der Vakuumpumpen 23 und/oder der Befüll- oder Gaszuführeinrichtungen oder der einzelnen Fluidleitungen stets zu Fertigungsfehlern bei den am entsprechenden Pumpkopf 15 angebrachten Lampenkolben führen. Tritt also an einem der Pumpköpfe 15 immer wieder ein Fehler auf, so ist das diesem Pumpkopf 15 zugeordnete Leitungssystem, die zugeordnete Vakuumpumpe 23 und/oder die zugeordnete Gaszuführeinrichtung zum Befüllen der Lampenkolben 17 fehlerhaft. Diese Kenntnis der Lage des Fehlers ermöglicht zum einen eine vereinfachte Fehlersuche und -behebung und gestatten andererseits den weiteren Fertigungsbetrieb der Pumpmaschine 10 ohne Verwendung des entsprechenden Pumpkopf 15. Der Fertigungsbetrieb kann also zunächst weitergeführt werden, da der fehlerhafte Lampenkolben erzeugende Pumpkopf 15 gezielt abgeschaltet werden kann, also gezielt bis zur nächsten Wartungsunterbrechung nicht meht verwendet wird. Der Einsatz der erfindungsgemäßen Verbindungsvorrichtung an einer beschriebenen Pumpmaschine erhöht somit deren Produktivität, da Stillstandszeiten verkürzt und nötige Reparaturarbeiten durch eine erleichterte Fehlersuche vereinfacht und beschleunigt werden können.

## Patentansprüche

1. Verbindungsvorrichtung zur Verbindung zumindest einer stationären Fluidleitung (25) mit zumindest einer relativ dazu bewegbaren Fluidleitung (19), die eine Umlaufbewegung um eine Drehachse (A) ausführen kann, mit
- einem koaxial zur Drehachse (A) angeordneten stationären Teil (26), in dem zumindest eine mit der stationären Fluidleitung (25) verbindbare stationäre Anschlußleitung (34) vorgesehen ist,
- einem koaxial zur Drehachse (A) und zum stationären Teil (26) angeordneten Drehteil (28), in dem zumindest eine mit diesem umlaufende Anschlußleitung (41) vorgesehen ist, die mit der bewegbaren Fluidleitung (19) verbindbar ist, und
- zumindest einem Ringkanal (43) zwischen dem stationären Teil (26) und dem Drehteil (28), in den die stationäre und die umlaufende Anschlußleitung (34, 41) münden.

2. Verbindungsvorrichtung nach Anspruch 1, **dadurch gekennzeichnet**, daß eine Vielzahl von stationären Anschlußleitungen (34) im stationären Teil (26) und eine Vielzahl von umlaufenden Anschlußleitungen (41) im Drehteil (28) vorgesehen sind.

3. Verbindungsvorrichtung nach Anspruch 2, **dadurch gekennzeichnet**, daß jede der stationären Anschlußleitungen (34) über einen zugeordneten Ringkanal (43) mit einer der umlaufenden Anschlußleitungen (41) verbunden ist.

4. Verbindungsvorrichtung nach Anspruch 1, 2 oder 3, **dadurch gekennzeichnet**, daß zwischen dem stationären Teil (26) und dem Drehteil (28) ein vorzugsweise zylindrischer Ringkanalraum (39) vorgesehen ist, in dem einzelne Ringkanäle (43) durch Dichtringe (42) von einander getrennt sind.

5. Verbindungsvorrichtung nach Anspruch 4, **dadurch gekennzeichnet**, daß der Ringkanalraum (39) an seinen axialen Enden durch Radialflansche (32, 38) begrenzt wird, von denen der eine am stationären Teil (26) und der andere am Drehteil (38) vorgesehen ist.

6. Verbindungsvorrichtung nach Anspruch 4 oder 5, **dadurch gekennzeichnet**, daß zwischen den die Ringkanäle (43) begrenzenden Dichtringen (42) Distanzringe als Abstandshalter vorgesehen sind.

7. Verbindungsvorrichtung nach einem der vorstehenden Ansprüche, **dadurch gekennzeichnet**, daß die Anschlußleitungen (34) im radial innenliegenden, hülsenartig ausgebildeten Teil (26), also im stationären Teil oder im Drehteil, sich axial erstreckende Abschnitte (33) in einer Umfangswand des radial innenliegenden Teils (26) aufweisen, die jeweils mit einem in den zugeordneten Ringkanal (43) mündenden radialen Abschnitt (35) kommunizieren.

8. Verbindungsvorrichtung nach Anspruch 7, **dadurch gekennzeichnet**, daß alle sich axial erstreckenden Abschnitte (33) der Anschlußleitungen (34) im radial innenliegenden Teil (26) sich vom selben axialen Ende des radial innenliegenden Teils (26) aus zu den zugeordneten radialen Abschnitten (35) erstrecken.
